# EUROPEAN PATENT SPECIFICATION

(11) **EP 3 322 883 B1**
(45) Date of publication and mention of the grant of the patent: **19.06.2019**
(21) Application number: 16754004.6
(22) Date of filing: 14.07.2016
(51) Int. Cl.: F01P 3/20, B60L 11/00, F02M 21/02

(54) **AN ENGINE COOLING SYSTEM**
MOTORKÜHLUNGSSYSTEM
SYSTÈME DE REFROIDISSEMENT DE MOTEUR

(30) Priority: 14.07.2015 TR 201508775
(43) Date of publication of application: 23.05.2018
(73) Proprietor: Tofas Turk Otomobil Fabrikasi Anonim Sirketi, Bursa (TR)
(72) Inventor: OZKAN, Cengiz, Bursa (TR); SEN, Emre, Osmangazi/Bursa (TR); GUDU, Turker, Bursa (TR); SAYAR, Asli, Gebze/Kocaeli (TR); CANBAK, Onur, Gebze/Kocaeli (TR); SENER, Tansel, Osmangazi Bursa (TR)
(74) Representative: Dericioglu Kurt, Ekin
(86) International application number: PCT/TR2016/050224
(87) International publication number: WO 2017/010959

(56) References cited:
- DE-A1-102006 052 110
- US-A- 5 540 190
- US-A1- 2015 136 273

## Description

### Field of the Invention

The present invention relates to engine cooling systems which are used for providing the heat required by the ANG (Adsorbed Natural Gas) system.

### Background of the Invention

Approximately 33% of the heat produced as a result of combustion in engines is converted to mechanical energy, 33% thereof is discharged through exhaust, and the remaining 33% is discharged through the cooling system. Engine temperature should be maintained within a specific temperature range so that the engine parts can be operated without disruption of their functionality. To this end, engine cooling systems, which eliminate the excessive heat in the engine and enable the engine to remain at the most efficient heat, are required.

Natural gas, which is the cleanest fuel and comprises the least carbon and hydrogen among the fossil fuels used as an alternative to petrol, has been used in many studies since recent past. Today, natural gas varies depending on the storage methods selected in the vehicle, namely as CNG (Compressed Natural Gas), LNG (Liquefied Natural Gas) and ANG (Adsorbed Natural Gas).

By means of the method called ANG (adsorbed natural gas) technology, natural gas molecules are compressed to approximately 35 bar pressure and impregnated at ambient temperature on porous structures of carbon derivative or metal organic hybrid materials. Natural gas components can be stored at a relatively low pressure by means of the ANG (adsorbed natural gas) technology, and thus the requirement of manufacturing the tanks in a cylindrical form, which causes disadvantages for integration on the vehicle in terms of layout, is eliminated.

In the state of the art applications, in engines with cooling systems, there are water channels in the engine, engine block and engine cover, and the cooling fluid circulates within these channels to maintain the engine temperature within the desired operation range. The water, whose temperature increases in the engine channels, is delivered to the radiator by means of the pump, and after being cooled via the radiator it returns to the engine block. This cycle is continuously repeated so as to maintain the temperature of the circulation water within a specific range and this way engine temperature is kept under control.

United States patent document no. US20140182561, an application in the state of the art, discloses a method comprising storage, compression, interface modules which can be integrated to vehicles that run on natural gas or other gaseous fuels. The compressed gas fuel system includes an intercooler that is used for removing heat after each stage of compression in the compressor. A heat exchanger with cold fluid inlet and fluid exit is used to allow for cold fluid flow to pass across the contact area. Content of the tank is comprised of ANG (adsorbed natural gas) material and exhaust gas of the engine is used as the heat source in order to store the gas. A similar cooling system is shown in the US 20015/136273 A1.

### Problems Solved by the Invention

The objective of the present invention is to enable on-vehicle integration that will provide the operation conditions of a system, which reduces requirement for a radiator by making use of the heat in the vehicle cooling system as an operation principle and which can store natural gas in the ANG tanks provided therein up to approximately 35 bar pressure. By means of this method, the heat required for desorption of the natural gas impregnated in the ANG tanks will also be provided.

The ANG system of the present invention is incorporated between the engine and the radiator module with the purpose of cooling the engine and to obtain the heat required by the ANG storage tank; the heated cooling water leaving the engine is delivered to the ANG system via a hose/pipe; the water that has lost heat leaving the ANG system returns to the radiator inlet line via a hose/pipe; and thus the circulation is completed. This way, need for a radiator in the cooling system decreases. Additionally, the heat required by the ANG system is provided by the heated circulation water leaving the engine.

### Detailed Description of the Invention

An engine cooling system developed to fulfill the objectives of the present invention is illustrated in the accompanying figure, in which:

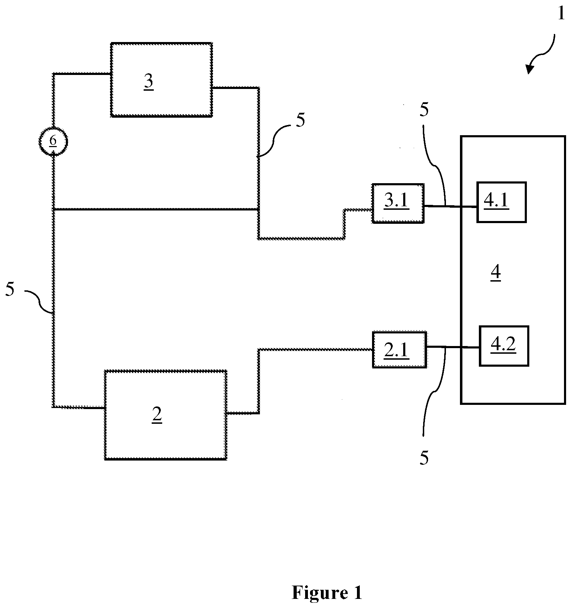

**Figure 1** is a schematic view of Integration of the Heating System to the Engine Cooling Circuit.

The components shown in the figure are given reference numbers as follows:
**1.** Engine cooling system
**2.** Radiator
   **2.1.** Radiator inlet
**3.** Engine
   **3.1.** Engine outlet
**4.** ANG system
   **4.1.** ANG inlet
   **4.2.** ANG outlet
**5.** Circulation Line
**6.** Pump

The engine cooling system (1) of the present invention basically comprises
- at least one vehicle engine (3) that causes the water, which is used for circulation cooling, to get heated as a result of the combustion occurring during operation thereof,
- at least one radiator (2),
- at least one ANG system (4) which cools the hot water it receives from the engine (3) via the circulation lines (5) and transmits it to the radiator (2) again via the circulation lines (5),
- at least one engine outlet (3.1) which enables the heated water to exit from the engine (3),
- at least one ANG inlet (4.1), which is connected to the engine outlet (3.1) via the circulation lines (5), and which enables the water exiting through the engine outlet (3.1) to be received by the ANG system (4),
- at least one ANG outlet (4.2) which enables the water that has lost heat to exit from the ANG system (4),
- at least one radiator inlet (2.1), which is connected to the ANG outlet (4.2) via the circulation lines (5), and which enables the water exiting through the ANG outlet (4.2) to be received by the radiator (2),
- at least one pump (8) which provides the pressure required for the cooling water to complete its circulation between the engine (3), ANG system (4) and the radiator (2) via the circulation lines (5).

In the engine cooling system (1) of the present invention, the heated water produced as a result of the combustion in the engine (3) is delivered from the engine (3) to the ANG system (4) via the connection provided by the circulation lines (5) between the engine outlet (3.1) and the ANG inlet (4.1). The water transmission between the engine (3) and the ANG system (4) is provided as a one-way (unidirectional) transmission within the circulation lines (5), i.e. from the engine (3) to the ANG system (4).

ANG system (4) uses the hot water coming from the engine (3) in the process of desorption of the adsorbed natural gas (accumulating on the surface as condensed). During this process, while the hot water loses heat, the ANG system (4) is heated. The water losing heat is delivered from the ANG outlet (4.2) to the radiator inlet (2.1) via the circulation lines (5) with the purpose of completing the cooling process (further cooling the water in the radiator (2)).

The water cooled in the radiator (2) returns from the radiator (2) to the engine (3) via the circulation lines with the purpose of completing the process of cooling the engine (3). When the cooled water used for cooling purposes in the engine (3) gets heated, the above described processes are repeated and the cooling water circulates in order through the engine (3) - ANG system (4) - radiator (2).

The pressure required for the cooling water to perform its unidirectional circulation through the engine (3), ANG system (4), radiator (2) and the circulation lines (5) is provided by the pump (6).

Upon addition of the ANG system (4) to the cooling circulation, the amount of the cooling fluid increases and the circulation distance gets longer. This causes pressure drop and failure to complete the cycle. In a preferred embodiment of the invention, the circulation lines (5) have a diameter that will prevent falling below the critical fluid (water) speed (minimum fluid speed required for completion of the circulation).

In another preferred embodiment of the invention, a second pump (6) is used. Thus diameters of the circulation lines (5) are not required to be calculated.

In a preferred embodiment of the invention, end parts (e.g. the end entering into the engine (3)) of the circulation lines (5) are made of rubber and the middle parts thereof are made of metal. Thus, they are prevented from being adversely affected by the thermal sources created by the exhaust pipe.

In a preferred embodiment of the invention, since the water in the expansion tank should be above the level of the fluid circulating in the system, the ANG system (4) further comprises an expansion tank.

## Claims

1. An engine cooling system (1) comprising
- at least one vehicle engine (3) that causes the water, which is used for circulation cooling, to get heated as a result of the combustion occurring during operation thereof,
- at least one radiator (2),
- at least one ANG system (4) which cools the hot water it receives from the engine (3) via the circulation lines (5) and transmits it to the radiator (2) again via the circulation lines (5),
- at least one engine outlet (3.1) which enables the heated water to exit from the engine (3),
- at least one ANG inlet (4.1), which is connected to the engine outlet (3.1) via the circulation lines (5), and which enables the water exiting through the engine outlet (3.1) to be received by the ANG system (4),
- at least one ANG outlet (4.2) which enables the water that has lost heat to exit from the ANG system (4),
- at least one pump (8) which provides the pressure required for the cooling water to complete its circulation between the engine (3), ANG system (4) and the radiator (2) via the circulation lines (5), **characterised by** at least one radiator inlet (2.1), which is connected to the ANG outlet (4.2) via the circulation lines (5), and which enables the water exiting through the ANG outlet (4.2) to be received by the radiator (2).

2. An engine cooling system (1) according to Claim 1, **characterized by** the circulation lines (5) which have a diameter that will prevent falling below the critical fluid speed.

3. An engine cooling system (1) according to Claim 1, **characterized by** a plurality of pumps (6) if the diameter of the circulation lines (5) is at a size that will cause falling below the critical fluid speed.

4. An engine cooling system (1) according to Claim 1, **characterized by** the circulation lines (5) whose middle parts are made of metal.

5. An engine cooling system (1) according to Claim 1, **characterized by** the circulation lines (5) whose end parts are made of rubber.

6. An engine cooling system (1) according to Claim 1, **characterized by** the ANG system (4) comprising an expansion tank.

## Patentansprüche

1. Motorkühlungssystem (1), umfassend
- mindestens einen Fahrzeugmotor (3), der bewirkt, dass das Wasser, das zur Umlaufkühlung verwendet wird, aufgrund der während des Betriebs auftretenden Verbrennung erwärmt wird,
- mindestens einen Heizkörper (2),
- mindestens ein ANG-System (4), das das vom Motor (3) aufgenommene Warmwasser über die Zirkulationsleitungen (5) kühlt und es über die Zirkulationsleitungen (5) wieder an den Heizkörper (2) übermittelt,
- mindestens einen Motorauslass (3.1), der den Austritt des erwärmten Wassers aus dem Motor (3) ermöglicht,
- mindestens einen ANG-Einlass (4.1), der über die Zirkulationsleitungen (5) mit dem Motorauslass (3.1) verbunden ist und der es ermöglicht, das durch den Motorauslass (3.1) austretende Wasser vom ANG-System (4) aufzunehmen,
- mindestens einen ANG-Auslass (4.2), der es dem Wasser, das Wärme verloren hat, ermöglicht, aus dem ANG-System (4) auszulaufen,
- mindestens eine Pumpe (8), die den Druck bereitstellt, der erforderlich ist, damit das Kühlwasser seinen Kreislauf zwischen Motor (3), ANG-System (4) und Heizkörper (2) über die Zirkulationsleitungen (5) beendet, **gekennzeichnet durch** mindestens einen Heizkörpereinlass (2.1), der über die Zirkulationsleitungen (5) mit dem ANG-Auslass (4.2) verbunden ist und der es ermöglicht, das durch den ANG-Auslass (4.2) austretende Wasser vom Heizkörper (2) aufzunehmen.

2. Motorkühlungssystem (1) nach Anspruch 1, **gekennzeichnet durch** die Zirkulationsleitungen (5), die einen Durchmesser aufweisen, der ein Unterschreiten der kritischen Fluidgeschwindigkeit verhindert.

3. Motorkühlungssystem (1) nach Anspruch 1, **gekennzeichnet durch** eine Vielzahl von Pumpen (6), wenn der Durchmesser der Zirkulationsleitungen (5) eine Größe aufweist, die ein Unterschreiten der kritischen Fluidgeschwindigkeit bewirkt.

4. Motorkühlungssystem (1) nach Anspruch 1, **gekennzeichnet durch** die Zirkulationsleitungen (5), deren Mittelteile aus Metall bestehen.

5. Motorkühlungssystem (1) nach Anspruch 1, **gekennzeichnet durch** die Zirkulationsleitungen (5), deren Endteile aus Gummi bestehen.

6. Motorkühlungssystem (1) nach Anspruch 1, **gekennzeichnet durch** das ANG-System (4) einen Expansionstank umfasst.

## Revendications

1. Système de refroidissement de moteur (1) comprenant
- au moins un moteur de véhicule (3) qui chauffe l'eau utilisée pour le refroidissement par circulation en raison de la combustion qui se produit pendant son fonctionnement,
- au moins un radiateur (2),
- au moins un système ANG (4) qui refroidit l'eau chaude qu'il reçoit du moteur (3) via les conduites de circulation (5) et la transmet à nouveau au radiateur (2) via les conduites de circulation (5),
- au moins une sortie moteur (3.1) qui permet à l'eau chauffée de sortir du moteur (3),
- au moins une entrée ANG (4.1) qui est reliée à la sortie du moteur (3.1) par les conduites de circulation (5) et qui permet au système ANG (4) de recevoir l'eau sortant par la sortie du moteur (3.1),
- au moins une sortie ANG (4.2) qui permet à l'eau ayant perdu de la chaleur de sortir du système ANG (4),
- au moins une pompe (8) qui fournit la pression nécessaire pour que l'eau de refroidissement complète sa circulation entre le moteur (3), le système ANG (4) et le radiateur (2) via les conduites de circulation (5), **caractérisé par** au moins une entrée de radiateur (2.1) qui est reliée à la sortie ANG (4.2) par l'intermédiaire des conduites de circulation (5), et qui permet à l'eau sortant par la sortie ANG (4.2) d'être reçue par le radiateur (2).

2. Système de refroidissement de moteur (1) selon la revendication 1, **caractérisé par** les conduites de circulation (5) qui ont un diamètre qui empêche de descendre en dessous de la vitesse critique du fluide.

3. Système de refroidissement de moteur (1) selon la revendication 1, **caractérisé par** une pluralité de pompes (6) si le diamètre des conduites de circulation (5) est d'une taille qui provoquera une chute en dessous de la vitesse critique du fluide.

4. Système de refroidissement de moteur (1) selon la revendication 1, **caractérisé par** les conduites de circulation (5) dont les parties centrales sont en métal.

5. Système de refroidissement de moteur (1) selon la revendication 1, **caractérisé par** les conduites de circulation (5) dont les parties d'extrémité sont en caoutchouc.

6. Système de refroidissement de moteur (1) selon la revendication 1, **caractérisé par** le système ANG (4) comprenant un vase d'expansion.
